Europäisches Patentamt

European Patent Office

Office européen des brevets

(19)

(11) Veröffentlichungsnummer: **0 195 246**
**A2**

(12) **EUROPÄISCHE PATENTANMELDUNG**

(21) Anmeldenummer: **86101878.6**

(22) Anmeldetag: **14.02.86**

(51) Int. Cl.⁴: **B 23 B 29/04**

(30) Priorität: **13.03.85 DE 3508963**

(43) Veröffentlichungstag der Anmeldung:
**24.09.86 Patentblatt 86/39**

(84) Benannte Vertragsstaaten:
**AT BE CH DE FR GB IT LI LU NL SE**

(71) Anmelder: **Zettl, Otto, jun.**
**Fellenbergstrasse 9**
**D-8969 Reicholzried(DE)**

(72) Erfinder: **Zettl, Otto, jun.**
**Fellenbergstrasse 9**
**D-8969 Reicholzried(DE)**

(74) Vertreter: **Hübner, Hans-Jürgen, Dipl.-Ing.**
**Mozartstrasse 21**
**D-8960 Kempten(DE)**

(54) **Schnellwechselkupplung für Schneidwerkzeuge.**

(57) Ein Werkzeugträger (14) und ein ein Werkzeug (16) tragender Kopf (12) sind nur durch eine Formschlußkupplung miteinander verbunden. Diese besteht aus einer ersten Kontaktfläche (24) des Kopfes (12), die den Werkzeugträger (14) untergreift, einer zweiten Kontaktfläche (26), die letzteren hintergreift und einer dazwischen angeordneten dritten kontaktfläche (28), die die Schneidlast auf den Werkzeugträger (14) überträgt.

FIG.1

EP 0 195 246 A2

0195246

Die Erfindung betrifft eine Schnellwechselkupplung für Schneidwerkzeuge, bestehend aus einem das Schneidwerkzeug tragenden Kopf, der an einem Werkzeugträger auswechselbar gekuppelt ist, wobei der Kopf mit einer unteren Hinterfläche am unteren Ende einer Vorderfläche des Werkzeugträgers 14 längs einer ersten Kontaktzone abgestützt ist, weiterhin einen oberen, sich rückwärts erstreckenden Vorsprung mit einer abwärtsweisenden Nase aufweist, die in eine oben offene Ausnehmung des Werkzeugträgers eingreift und sich mit ihrer Vorderfläche an einer, eine zweite Kontaktzone bildenden Vorderfläche der Ausnehmung abstützt und eine dritte Kontaktzone zwischen Kopf und Werkzeugträger vorgesehen ist und wobei zwischen Kopf und Werkzeugträger ein, ein relatives Querverschieben verhindernder seitlicher Formschluß besteht und zwischen ihnen Haltemittel wirksam sind, die den Kopf in seiner Kupplungsstellung sichern.

Aus dem DE-U-1 834 308 ist eine Schnellwechselkupplung dieser Art bekannt. Die erste und die dritte Kontaktzone liegen in einer gemeinsamen parallel zur Lastrichtung verlaufenden Vertikalebene und die Haltemittel bestehen aus Klemmschrauben, die die Nase des Vorsprungs in die Ausnehmung drücken, wobei die schrägliegenden Kontaktflächen der zweiten Kontaktzone Keilflächen bilden. Die Klemmkraft der Klemmschrauben hält den Kopf kraftschlüssig am Werkzeugträger. Für ältere Drehmaschinen bringt dieses bekannte Schnellwechselsystem Vorteile. Für numerisch gesteuerte Werkzeugmaschinen mit automatisiertem Werkzeugwechsel ist die bekannte Kupplung jedoch nicht geeignet, und zwar insbesondere deswegen, weil die Klemmschrauben so stark belastet werden müssen, daß sie den Kopf auch bei größter Schneidlast sicher in Kupplungsstellung halten. Gleichwohl ist ein Lockern der Schrauben aufgrund von Vibrationen nicht ausgeschlossen, was zu großen Schäden an den teuren Werkzeugmaschinen führen kann.

Aus der DE-Zeitschrift tz für Metallbearbeitung 1984 H2, Seite 31, 32 ist ein Werkzeug - Schnellwechselsystem für moderne NC-Maschinen bekannt, bei dem der das Werkzeug tragende Kopf formschlüssig am Werkzeugträger gehalten ist. Auch hier ist jedoch eine Verspannung mittels einer Zugstange durch den Werkzeugträger hindurch nach hinten notwendig. Dieses System hat darüberhinaus den Nachteil, daß keine herkömmlichen Werkzeugträger verwendet werden können, sondern Spezialausführungen nötig sind.

Aufgabe der Erfindung ist es, die Schnellwechselkupplung der eingangs genannten Art zu vereinfachen und

0195246

so auszubilden, daß schneidlastabhängige Spannmittel entfallen und ein einfacher automatisierter Werkzeugwechsel möglich wird.

Zur Lösung dieser Aufgabe wird bei der Schnellwechselkupplung der eingangs genannten Art vorgesehen, daß der Kopf den Werkzeugträger an der ersten Kontaktzone untergreift, daß die Vorderfläche der Ausnehmung des Werkzeugträgers für ein Vorwärtsschwenken der Nase des Kopfes um die erste Kontaktzone ein Widerlager bildet, daß die dritte Kontaktzone sich wenigstens mit einer Komponente und/oder einem Abschnitt quer zur Schneidlastrichtung erstreckt und zur Schneidlastaufnahme eingerichtet ist, daß in der Kupplungsstellung zwischen Nase und Ausnehmung ein, eine Rückwärtsschwenkbewegung des Kopfes im Sinn einer Werkzeugbewegung entgegen der Schneidlastrichtung erlaubender Freiraum gebildet ist und daß die Haltemittel als dieser Rückwärtsschwenkbewegung entgegenwirkende, schneidlastunabhängige Sicherung ausgebildet sind.

Die Erfindung bringt den Vorteil, daß jegliche von der Schneidlastaufnahme beeinflußte Klemmittel entfallen. Dies ermöglicht einen sehr einfachen automatischen Werkzeugwechsel. Die Rückwärtsschwenkbewegung des Kopfes kann um die zweite oder dritte Kontaktzone ggf. mit einer Überlagerung einer Hubbewegung des Kopfes erfolgen. Anschließend kann der
Kopf auf einer beliebigen Bahn z.B. vertikal nach
oben abgehoben werden.

Die vorstehende Charakterisierung der Begriffe vorn
und unten bezieht sich zum leichteren Verständnis
auf eine vertikale Schneidlastrichtung. Für andere
Anordnungen und Bewegungen des Schneidwerkzeugs bedeutet "vorn": in Richtung zum Schneidwerkzeug hinliegend und "unten": in Schneidlastrichtung gesehen.

Ausgestaltungen der Erfindung bestehen darin, daß
die zweite und die dritte Kontaktzone in Schneidlastrichtung gesehen, etwa auf gleicher Höhe liegen,
daß die erste Kontaktzone durch ebene Schrägflächen
an Kopf und Werkzeugträger gebildet ist, die unter
einem Winkel von etwa 30° bis etwa 60° zur Schneidlastrichtung nach hinten abwärts geneigt angeordnet
sind, die dritte Kontaktzone ebenfalls durch Schrägflächen gebildet ist und einen Winkel von etwa 70°
bis etwa 110° mit der ersten Kontaktzone bildet,
daß die zweite und/oder die dritte Kontaktzone wenigstens angenähert auf gleicher Höhe wie das Schneidwerkzeug liegt und daß der seitliche Formschluß zwischen Kopf und Werkzeugträger beidseitig vorhanden

0195246

und in Form einer Selbstzentriereinrichtung ausgebildet ist. Beim Kupplungsvorgang wird der Kopf somit selbsttätig in die Kupplungsstellung geführt.
Zu diesem Zweck steht von einer Kontaktfläche mindestens einer Kontaktzone mindestens ein Vorsprung
vor, der in eine, in der anderen Kontaktfläche dieser Kontaktzone vorgesehenen Ausnehmung spielfrei
eingreift, wobei die einander kontaktierenden Seitenflächen des Vorsprungs und der Ausnehmung bezüglich der Kupplungsrichtung gegensinnig schräg gestellt sind.

Wesentlich ist, daß die sich am Werkzeugträger abstützende Sicherung auf den Kopf ein im Sinne der
Schneidlast wirkendes Moment ausübt. Die Sicherung
könnte ganz entfallen, wenn die Maschine vibrationsfrei läuft und keine Kräfte entgegen der Schneidlastrichtung auf das Schneidwerkzeug ausgeübt werden.

Die Sicherung besteht gemäß einer Ausgestaltung der
Erfindung aus einem im Kopf oder im Werkzeugträger
eingebauten gefederten Druckbolzen, Schwenkhebel
oder Exzenter, bzw. einem formschlüssigen Verriegelungselement.

Ein Erfindungsmerkmal besteht darin, daß die drei
Kontaktzonen auf einer, im Schnitt gesehen, etwa
C-förmigen Linie liegen, wobei die erste und zweite Kontaktzone die C-Enden bilden und die dritte Kontaktzone in der oberen Hälfte des C-Mittelbereiches liegt. Die C-Enden des Kopfes unter-und hintergreifen einen komplementären Kupplungsvorsprung des Werkzeugträgers und der obere C-Mittelbereich des Kopfes überträgt mindestens einen Teil der Schneidlast.

Das erfindungsgemäße Prinzip erlaubt eine ausschließlich formschlüssige Kupplung des Kopfes am Werkzeugträger und damit ein schnelles einfaches Wechseln des Kopfes.

Anhand der Zeichnung, die Ausführungsbeispiele darstellt, sei die Erfindung näher beschrieben.

Es zeigt

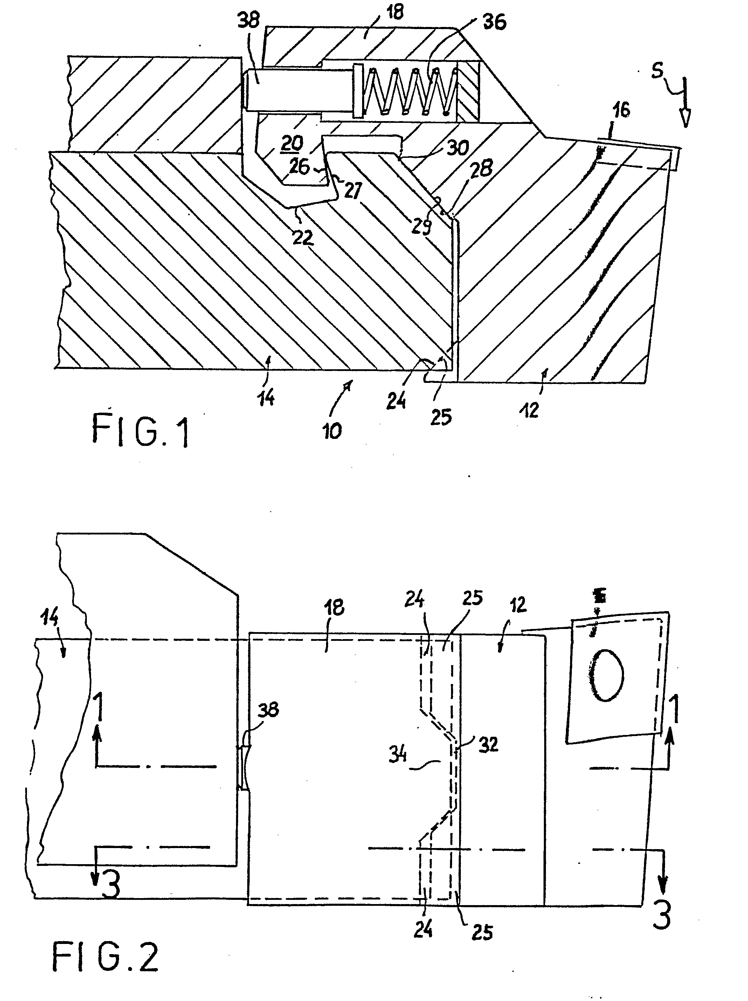

FIG. 1      eine Längsschnittansicht durch eine Schnellwechselkupplung, längs der Linie 1-1 der FIG. 2,

FIG. 2      eine Draufsicht auf die Schnellwechselkupplung gemäß FIG. 1,

FIG. 3      eine Längsschnittansicht durch die Schnellwechselkupplung längs der Linie 3-3 der

              FIG. 2,

FIG. 4      eine Längsschnittansicht durch eine abgewandelte Ausführungsform der Schnellwechselkupplung, und

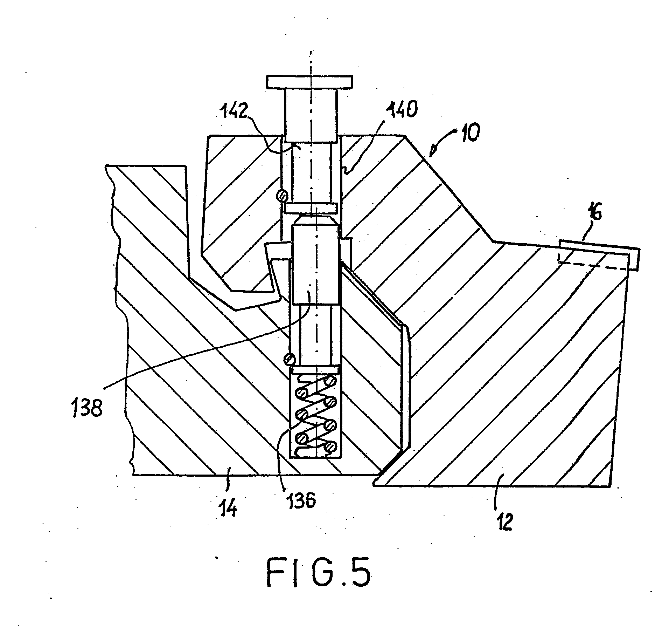

FIG. 5    eine andere Verriegelungseinrichtung.


Eine Schnellwechselkupplung 10 weist einen,ein Schneidwerkzeug 16 aufweisenden Kopf 12 und einen Werkzeugträger 14 auf. Der Kopf 12 hat einen rückwärtsweisenden Vorsprung 18 mit einer abwärtsweisenden Nase 20,
die in eine oben offene Ausnehmung 22 des Werkzeugträgers 14 eingreift. Eine untere Hinterfläche 24 des
Vorsprungs 12 untergreift eine untere Vorderfläche 25
des Werkzeugträgers 14. Diese beiden Flächen 24,25
bilden die erste Kontaktzone und sind unter einem
Winkel von 45° zur Schneidlastrichtung S schräggestellt. Die Vorderfläche 26 der Nase 20 berührt die
Vorderfläche 27 der Ausnehmung 22. Dieses Flächenpaar bildet die zweite Kontaktzone 26, 27. Im Ausführungsbeispiel schließen die beiden Flächen 26,
27 einen sehr kleinen Winkel ein, sodaß theoretisch
nur ein Linienkontakt in der zweiten Kontaktzone
26, 27 besteht. Diese zweite Kontaktzone 26, 27
liegt etwa auf derselben Höhe wie das Schneidwerkzeug 16 und damit wesentlich oberhalb der ersten
Kontaktzone 24, 25. Etwa auf gleicher Höhe wie die
zweite Kontaktzone liegt die dritte Kontaktzone
28, 29, die von einer Hinterfläche 28 am Kopf 12 und einer Vorderfläche 29 am Werkzeugträger 14 gebildet wird. Diese beiden Flächen 28, 29 sind ebenfalls eben ausgebildet und verlaufen unter einem Winkel von 135° zur Schneidlastrichtung S. Im Ausführungsbeispiel liegen also die erste und dritte Kontaktzone rechtwinklig zueinander.

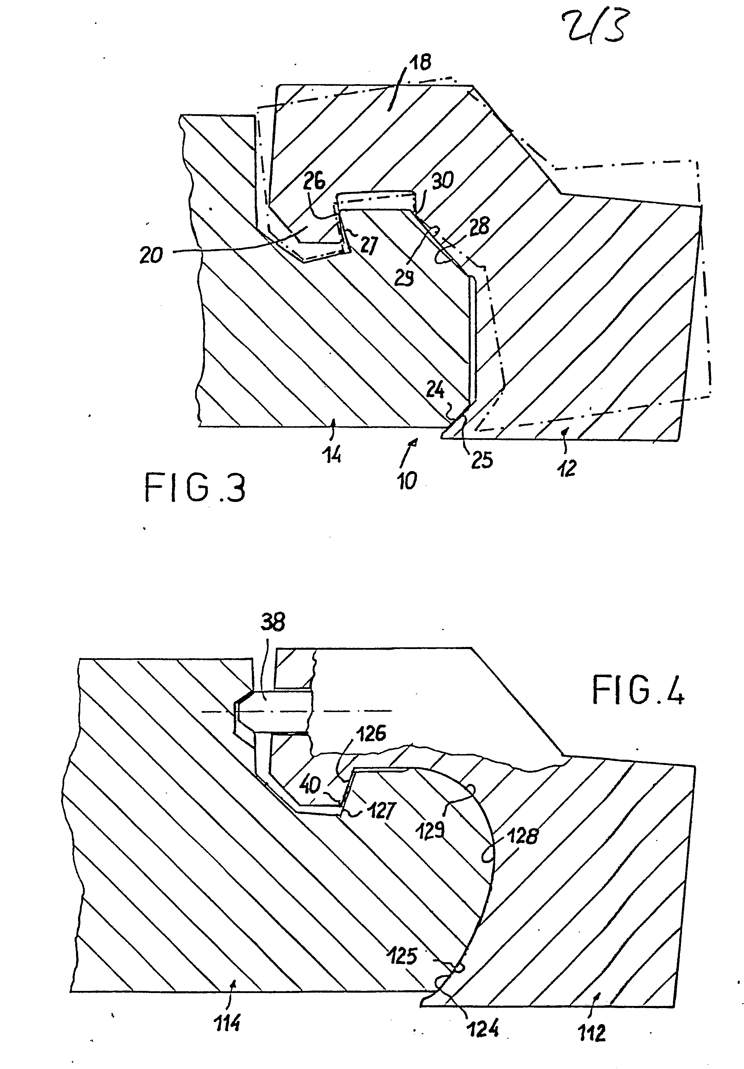

Die dritte Kontaktzone 28, 29 nimmt die Hauptschneidlast auf. Zusammen mit der ersten Kontaktzone 24,25 verhindert sie eine relative Vertikalbewegung in Schneidlastrichtung S. Die zweite Kontaktzone 26, 27 verhindert eine relative Bewegung zwischen Kopf 12 und Werkzeugträger 14 rechtwinklig zur Schneidlastrichtung S und eine Schwenkbewegung des Kopfes um die erste Kontaktzone 24,25. Ein Entkuppeln des Kopfes 12 ist nur möglich durch ein geringes Verschwenken des Kopfes 12 um die dritte Kontaktzone 28, 29 und zwar um deren obere Kante 30. Dabei taucht die Nase 20 tiefer in die Ausnehmung 22 ein und die untergreifende Kontaktfläche 24 des Kopfes 12 schwenkt unter der Kontaktfläche 25 hervor (strichpunktierte Stellung in FIG. 3). Der Kopf kann nun parallel zur Schneidlastrichtung S nach oben abgehoben werden.

In dem untergreifenden unteren, sich rückwärts erstreckenden Ende des Kopfes 12 ist eine mittlere,

- 9 -

0195246

im horizontalen Längsschnitt trapezförmige Ausnehmung 32 vorgesehen, sodaß die Kontaktfläche 24 in diesem Bereich unterbrochen ist. Der Werkzeugträger 14 hat in seinem Mittelbereich einen zur Ausnehmung 32 komplementären Vorsprung 34, der die beiden Kontaktflächen 25 voneinander trennt. Beim Kupplungsvorgang wird dank der schrägen Seitenflächen von Ausnehmung 32 und Vorsprung 34 der Kopf 12 selbsttätig zum Werkzeugträger 14 zentriert und in der Kupplungsstellung verhindert der so bewirkte Formschluß eine seitliche Relativverlagerung. Im rückwärtigen Vorsprung 18 des Kopfes 12 ist ein, von einer Feder 36 betätigter Druckbolzen 38 rechtwinklig zur Schneidlastrichtung S verschiebbar gelagert, der an der Vorderfläche des Werkzeugträgers 14 anliegt und den Kopf 12 im Sinne eines von der Schneidlast S ausgeübten Momentes leicht vorspannt. Dieser Druckbolzen bildet eine Sicherung, die ein Aufwärtsschwenken des Kopfes 12 verhindert. Wesentlich ist, daß zum Entkuppeln des Kopfes 12 zwei unterschiedliche Bewegungen nacheinander ausgeführt werden müssen.

Bei der Ausführung gemäß FIG. 4 sind die Kontaktzonen anders ausgebildet. Die erste Kontaktzone 124, 125 und die dritte Kontaktzone 128, 129 sind entlang einer gekrümmten Kontur zusammenhängend ausgebildet. Die Kontaktflächen 126, 127 der zweiten Kontaktzone liegen parallel zueinander und sind nach vorn aufwärts geneigt. Diese Aufwärtsneigung darf einen bestimmten Winkel nicht unterschreiten und zwar muß der Winkel den die Kontaktflächen 126, 127 mit der Verbindungslinie des untersten Punktes 40 der zweiten Kontaktzone 126, 127 und dem untersten Punkt der ersten Kontaktzone 124, 125 bilden größer als 90° sein. Nur dann verhindert die Fläche 127 ein Verschwenken des Kopfes 112 um die erste Kontaktzone 124, 125. Der Kopf 112 wird um den unteresten Punkt 40 der zweiten Kontaktzone 126, 127 in Rückwärtsrichtung in die Entkupplungsstellung geschwenkt. FIG. 4 veranschaulicht, daß die drei Kontaktzonen nicht notwendigerweise voneinander getrennt sein müssen. In FIG. 4 bilden die erste und dritte Kontaktzone einen durchgehenden Kontaktbereich und auch die zweite Kontaktzone könnte an diesem durchgehenden Bereich absatzfrei angeschlossen werden. Dadurch wird aber nicht von dem Prinzip der Dreizonen-Lagerung des Kopfes am Werkzeugträger abgewichen. Die Formgebung gemäß FIG. 4 gestattet es, den Kopf 112 nach anfänglicher Rückwärtsschwenkung schräg nach vorn und oben vom Werkzeugträger 114 abzunehmen.

0195246

Gemäß Fig. 5 ist ein durch eine Feder 136 entgegen der Schneidrichtung vorgespannter Druckbolzen 138 im Werkzeugträger 14 parallel zur Schneidvorrichtung verschiebbar angeordnet. Der Druckbolzen 138 greift in eine Bohrung 140 des Kopfes 12 formschlüssig ein und verriegelt diesen gegen ungewolltes Verschwenken. In der Bohrung 140 ist ein Betätigungskolben 142 verschiebbar gelagert, der frei auf dem Druckbolzen 138 aufliegt. Zum Entkuppeln fährt ein Greifer mit einem Stößel auf den Kopf 12, drückt den Betätigungskolben 142 abwärts bis der Druckbolzen 138 in den Werkzeugträger 14 voll eingetaucht und der Kopf 12 somit entriegelt ist, wonach der Greifer den Kopf 12 verschwenkt und abhebt. Der Verriegelungsvorgang erfolgt dank der Feder 136 selbsttätig, wenn der aufgesetzte Kopf 12 in die Kupplungsstellung geschwenkt worden ist.

PATENTANSPRÜCHE

1. Schnellwechselkupplung für Schneidwerkzeuge,
bestehend aus einem das Schneidwerkzeug (16)
tragenden Kopf (12; 112), der an einem der
Werkzeugmaschine zugeordneten Werkzeugträger
(14; 114) auswechselbar gekuppelt ist, wobei
der Kopf (12; 112) mit einer unteren Hinterfläche (24; 124) am unteren Ende einer Vorderfläche (25; 125) des Werkzeugträgers (14; 114)
längs einer ersten Kontaktzone (24, 25; 124, 125)
abgestützt ist, weiterhin einen oberen sich rückwärts erstreckenden Vorsprung (18) mit einer abwärtsweisenden Nase (20) aufweist, die in eine
oben offene Ausnehmung (22) des Werkzeugträgers
(14; 114) eingreift und sich mit ihrer Vorderfläche (26; 126) an einer, eine zweite Kontaktzone (26, 27; 126, 127) bildenden Vorderfläche
(27; 127) der Ausnehmung (22) abstützt und eine
dritte Kontaktzone (28, 29; 128, 129) zwischen
Kopf (12; 112) und Werkzeugträger (14; 114) vorgesehen ist und wobei zwischen Kopf (12; 112) und Werkzeugträger (14; 114) ein, ein relatives Querverschieben verhindernder seitlicher Formschluß (32, 34) besteht und zwischen ihnen Haltemittel (36, 38) wirksam sind, die den Kopf (12; 112) in seiner Kupplungsstelung sichern, dadurch gekennzeichnet, daß der Kopf (12;112) den Werkzeugträger (14; 114) an der ersten Kontaktzone (24, 25; 124,125) untergreift, daß die Vorderfläche (27; 127) der Ausnehmung (22) des Werkzeugträgers (14; 114) für ein Vorwärtsschwenken der Nase (20) des Kopfes (12; 112) um die erste Kontaktzone (24, 25; 124, 125) ein Widerlager bildet, daß die dritte Kontaktzone (28,29; 128, 129) sich wenigsten mit einer Komponente und/oder einem Abschnitt quer zur Schneidlastrichtung (S) erstreckt und zur Schneidlastaufnahme eingerichtet ist, daß in der Kupplungsstellung zwischen Nase (20) und Ausnehmung (22) ein, eine Rückwärtsschwenkbewegung des Kopfes (12; 112) im Sinn einer Werkzeugbewegung entgegen der Schneidlastrichtung (S) erlaubender Freiraum gebildet ist und daß die Haltemittel (36, 38) als dieser Rückwärtsschwenkbewegung entgegenwirkende, schneidlastunabhängige Sicherung ausgebildet sind.

2. Schnellwechselkupplung nach Anspruch 1, dadurch gekennzeichnet, daß die zweite (26,27; 126,127) und dritte Kontaktzone (28, 29; 128,129) in Schneidlastrichtung (S) gesehen, etwa auf gleicher Höhe liegen.

3. Schnellwechselkupplung nach Anspruch 1 oder 2, dadurch gekennzeichnet, daß die erste Kontaktzone (24,25) durch ebene Schrägflächen an Kopf (12) und Werkzeugträger (14) gebildet ist, die unter einem Winkel von etwa 30° bis etwa 60° zur Schneidlastrichtung (S) nach hinten abwärts geneigt angeordnet sind.

4. Schnellwechselkupplung nach einem der Ansprüche 1 bis 3, dadurch gekennzeichnet, daß die erste Kontaktzone (24,25) und die dritte Kontaktzone (28,29) einen Winkel im Bereich von etwa 70° bis etwa 110° miteinander bilden.

5. Schnellwechselkupplung nach einem der Ansprüche 1 bis 4, dadurch gekennzeichnet, daß die zweite (26,27; 126,127) und/oder die dritte Kontaktzone (28,29; 128,129) in Schneidlastrichtung (S) gesehen, etwa auf gleichem Niveau wie das Schneidwerkzeug (16) liegen bzw. liegt.

6. Schnellwechselkupplung nach einem der Ansprüche
1 bis 5, dadurch gekennzeichnet, daß der seitliche Formschluß zwischen Kopf (12; 112) und
Werkzeugträger (14; 114) beidseitig vorhanden
und in Form einer Selbstzentriereinrichtung ausgebildet ist.

7. Schnellwechselkupplung nach Anspruch 6, dadurch
gekennzeichnet, daß von einer Kontaktfläche (24)
mindestens einer Kontaktzone (24,25) mindestens
ein Vorsprung (34) vorsteht, der in eine, in der
anderen Kontaktfläche (25) dieser Kontaktzone (24,
25) vorgesehenen Ausnehmung (32) spielfrei eingreift und daß die einander kontaktierenden Seitenflächen des Vorsprungs (34) und der Ausnehmung
(32) gegensinnig schräg gestellt sind.

8. Schnellwechselkupplung nach einem der Ansprüche
1 bis 7, dadurch gekennzeichnet, daß die sich
am Werkzeugträger (14; 114) abstützende Sicherung
(36,38) auf den Kopf (12; 112) ein im Sinne der
Schneidlast wirkendes Vorspannmoment ausübt.

9. Schnellwechselkupplung nach Anspruch 8, dadurch gekennzeichnet, daß die Sicherung (36, 38) aus einem im Kopf (12; 112) oder im Werkzeugträger (14; 114) eingebauten gefederten Druckbolzen (38), einem Schwenkhebel oder Exzenter bzw. einem formschlüssigen Verriegelungselement (138) besteht.

10. Schnellwechselkupplung nach einem der Ansprüche 1 bis 9, dadurch gekennzeichnet, daß die drei Kontaktzonen (24-29; 124-129) auf einer im Schnitt etwa C-förmigen Linie liegen, wobei die erste (24,25; 124,125) und die zweite Kontaktzone (26,27; 126,127) die C-Enden bilden und die dritte Kontaktzone (28,29; 128,129) in der oberen Hälfte des C-Mittelbereiches liegt.

FIG.1

FIG.2

FIG.3

FIG.4

FIG.5